# EUROPÄISCHE PATENTSCHRIFT

(11) **EP 1 457 371 B1**
(45) Veröffentlichungstag und Bekanntmachung des Hinweises auf die Patenterteilung: **10.05.2006**
(21) Anmeldenummer: 04005004.9
(22) Anmeldetag: 03.03.2004
(51) Int. Cl.: B60H 1/34

(54) **Luftdüse, insbesondere zur Verwendung in Kraftfahrzeugen**
Air outlet, in particular for vehicles
Buse d'air, en particulier pour véhicules automobiles

(30) Priorität: 11.03.2003 DE 10310879
(43) Veröffentlichungstag der Anmeldung: 15.09.2004
(73) Patentinhaber: Behr GmbH & Co. KG, 70469 Stuttgart (DE)
(72) Erfinder: Klingler, Dietrich, 73540 Heubach (DE); Pubrl, Harald, 70437 Stuttgart (DE); Voigt, Klaus, 74321 Bietigheim-Bissingen (DE)
(74) Vertreter: Grauel, Andreas

(56) Entgegenhaltungen:
- DE-C- 4 207 670
- DE-U- 29 615 378
- US-A- 5 036 753

## Beschreibung

Die Erfindung betrifft eine Luftdüse, insbesondere zur Verwendung in Kraftfahrzeugen, gemäß dem Oberbegriff des Anspruchs 1.

Aus der EP 1 055 536 A1 ist ein Lamellerisystem für eine Belüftungsvorrichtung zur Regelung eines Luftstromes, insbesondere zur Belüftung eines Kraftfahrzeuges, mit mehreren, bewegungsgekoppelten Lamellen, welche über ein Stellelement zum Öffnen und Schließen eines Luftkanals bewegbar sind, bekannt. Die Lamellen sind in einem gemeinsamen Lagergestell gelagert und zwar jeweils über Gelenke, die Drehpunkte bilden. Im anderen Endbereich jeder Lamelle befindet sich ein Gelenk, wobei alle Gelenke mit einem gemeinsamen Stellhebel verbunden sind. Der Stellhebel weist in einem Endbereich zwei Zapfen auf. Diese Zapfen greifen in Führungsnuten, welche jeweils als stetig gewölbte Kurven ausgebildet sind.

Ein derartiges Lamellensystem lässt jedoch noch Wünsche offen.

Die DE 100 61 008 A1 offenbart eine Luftströmungsbeeinflussungseinrichtung, insbesondere zur Verwendung in der Instrumententafel von Fahrzeugen, mit einem Luftausströmer mit Funktionselementen, wobei der Luftausströmer im wesentlichen in horizontaler Richtung verlaufende Luftleitelemente aufweist. Die Funktionselemente des Luftausströmers umfassen jeweils wenigstens eine Betätigungseinrichtung für die im wesentlichen horizontal verlaufenden und die im wesentlichen vertikal verlaufenden Luftleitelemente, wobei die im wesentlichen horizontal verlaufenden Luftleitelemente im wesentlichen vollflächig verschließbar ausgebildet sind. Die wenigstens eine Betätigungseinrichtung für die im wesentlichen vertikal verlaufenden Luftleitelemente ist dabei durch eine in der vorstehenden Kontur des Luftausströmers angeordnete Betätigungseinheit gebildet.

Die gattungsgemäße US 5036753 offenbart einen Dual-Mode-Luftauslass für Klimaanlagen, bei welchem Lamellen parallel zueinander ausgerichtet sind.

Die DE 296 15 378 U offenbart eine Lüfterklappe mit in Luftströmungsrichtung hintereinander angeordneten Gruppen von Luftleitschaufeln.

Die DE 42 07 670 C offenbart eine Luftleitdüse mit Festlamellen und schwenkbar angeordneten Lamellen.

Eine derartige Luftströmungsbeeinflussungseinrichtung hat einen komplizierten Aufbau und lässt bei der Betätigung auch noch Wünsche offen.

Es ist Aufgabe der Erfindung, eine verbesserte Luftdüse zur Verfügung zu stellen.

Diese Aufgabe wird gelöst durch eine Luftdüse mit den Merkmalen des Anspruchs 1. Vorteilhafte Ausgestaltungen sind Gegenstand der Unteransprüche.

Erfindungsgemäß ist eine Luftdüse, insbesondere für ein Belüftungssystem eines Kraftfahrzeugs, mit einer Betätigungsvorrichtung, vorgesehen, bei dem die Luftdüse durch mindestens zwei, bevorzugt genau drei, nebeneinander angeordnete Luftdüseneinheiten gebildet ist, die durch die eine gemeinsame Betätigungsvorrichtung bedienbar sind.

Erfindungsgemäß wird jede Luftdüseneinheit durch eine Düse mit einer Mehrzahl von einzelnen Lamellen gebildet. Dabei sind die Lamellen zweier benachbarter Luftdüseneinheiten vorzugsweise um einen Winkel von 90° zueinander gedreht angeordnet, wodurch sich mit relativ einfachen Mitteln eine optimale Luftströmung ausbilden lässt.

Die einzelnen Luftdüseneinheiten sind bevorzugt in einem gemeinsamen Gehäuse in einer Reihe angeordnet.

Vorzugsweise sind die beiden äußeren Luftdüseneinheiten spiegelbildlich zueinander ausgebildet.

Vorzugsweise bildet eine Antriebswelle die gemeinsame Betätigungsvorrichtung, d.h. eine Drehbewegung wird in die erforderliche Stellbewegung für die einzelnen Luftdüseneinheiten umgewandelt. Dabei ist die Antriebswelle vorzugsweise in einem Winkel von 90° +/- 20°, insbesondere in einem Winkel von ca. 90°, verdrehbar.

Die Betätigungsvorrichtung der einzelnen Luftdüseneinheiten wird vorzugsweise durch eine Hebelvorrichtung gebildet, welche mit der Antriebswelle in direkter Verbindung steht.

Vorzugsweise ist mindestens eine der Luftdüseneinheiten, insbesondere sämtliche Luftdüseneinheiten derart ausgebildet, dass die einzelnen Lamellen entlang mindestens einem elastischen Element fixiert an demselben angeordnet sind. Das elastische Element wird vorzugsweise durch einen oder mehrere parallel zueinander verlaufende Drähte gebildet. Dabei sind die einzelnen Lamellen bevorzugt senkrecht zum elastischen Element angeordnet, wobei sie vorzugsweise direkt bei deren Herstellung um das elastische Element gespritzt und somit fest mit demselben verbunden werden.

Vorzugsweise sind Führungen für die einzelnen Lamellen vorgesehen, wobei die Führungen gegebenenfalls auch in Verbindung mit einem elastischen Element vorgesehen sein können und zur zusätzlichen Führung der Lamellen dienen. Die Führungen werden bevorzugt durch Nuten oder Schlitze in Steuerscheiben oder direkt im Gehäuse gebildet.

Im folgenden wird die Erfindung anhand mehrerer Ausführungsbeispiele unter Bezugnahme auf die Zeichnung im einzelnen erläutert. In der Zeichnung zeigen:
- Fig. 1a: eine Ansicht einer erfindungsgemäßen Luftdüse gemäß einem ersten Ausführungsbeispiel, die in einem Gehäuse eingebaut dargestellt ist,
- Fig. 1b: eine Ansicht einer Luftdüse von Fig. 1a ohne Gehäuse mit Pfeilen zur Darstellung der Funktion,
- Fig. 2a, 2b: Ansichten der Luftdüse von Fig. 1 a in der Stellung "werfen",
- Fig. 3a, 3b: Ansichten der Luftdüse von Fig. 1 a in der Stellung "streuen",
- Fig. 4: eine Ansicht der Luftdüse von Fig. 1a in der Stellung "richten",
- Fig. 5: eine Explosionsdarstellung einer mittleren Luftdüseneinheit gemäß einem zweiten Ausführungsbeispiel,
- Fig. 6a-c: verschiedene Stellungen der mittleren Luftdüseneinheit von Fig. 5,
- Fig. 7: eine Explosionsdarstellung einer mittleren Luftdüseneinheit gemäß einem dritten Ausführungsbeispiel,
- Fig. 8: die mittlere Luftdüseneinheit von Fig. 7 in zusammengebautem Zustand,
- Fig. 9a-c: verschiedene Stellungen der mittleren Luftdüseneinheit von Fig. 7,
- Fig. 10: eine Explosionsdarstellung einer mittleren Luftdüseneinheit gemäß einem vierten Ausführungsbeispiel, und
- Fig. 11: ein schematisch dargestellter Schnitt durch die mittlere Luftdüseneinheit von Fig. 10.

Eine erfindungsgemäße Luftdüse 1 weist drei Bereiche auf, die jeweils durch eine Luftdüseneinheit 2a, 2b und 2c gebildet werden. Die drei Luftdüseneinheiten 2a, 2b und 2c sind in einer Reihe und in einem gemeinsamen Gehäuse angeordnet. Hierbei ist die linke seitliche Luftdüseneinheit 2a spiegelbildlich bezüglich der rechten seitlichen Luftdüseneinheit 2c ausgebildet.

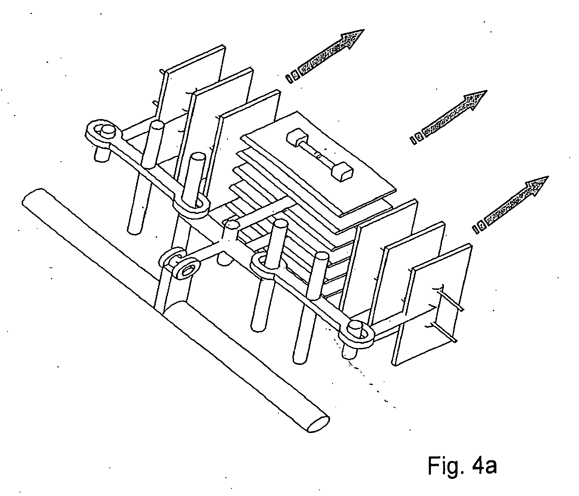

Jede Luftdüseneinheit 2a, 2b, 2c weist eine Mehrzahl von Lamellen 3 auf, die in der Stellung "richten", die in der Figur 4 dargestellt ist, innerhalb der jeweiligen Luftdüseneinheit 2a, 2b oder 2c im wesentlichen parallel zueinander ausgerichtet sind. Vorliegend sind die Lamellen 3 der beiden äußeren Luftdüseneinheiten 2a und 2c parallel zueinander ausgerichtet, die Lamellen 3 der mittleren Luftdüseneinheit 2b sind senkrecht zu denen der benachbarten Luftdüseneinheiten 2a und 2c ausgerichtet.

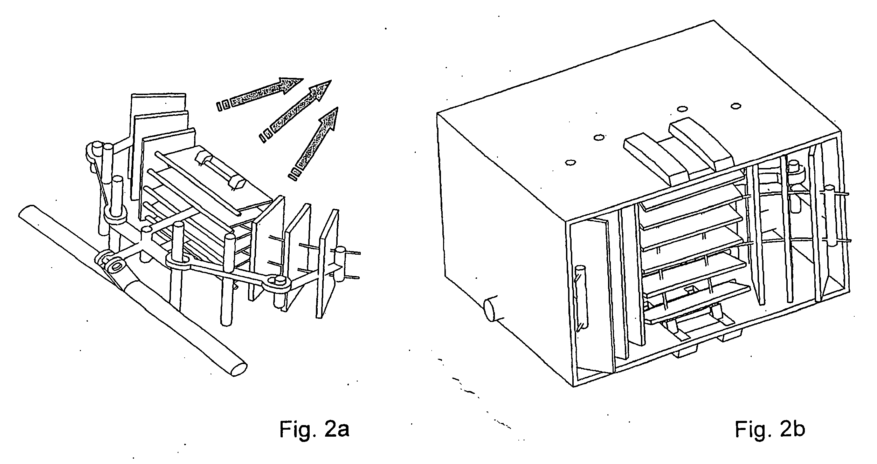

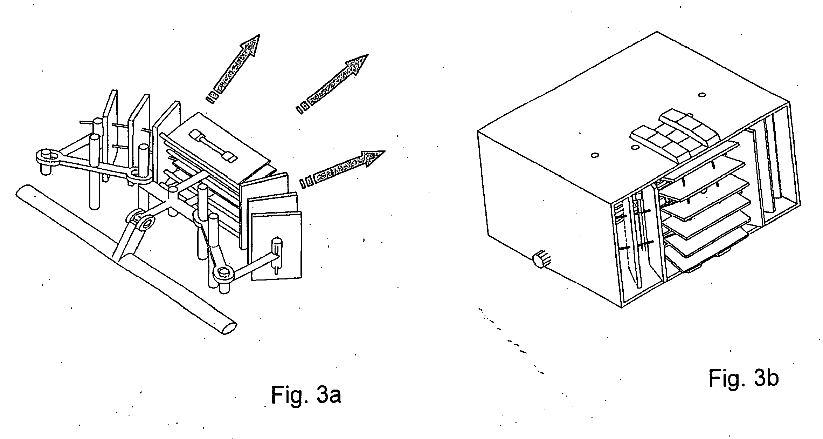

In der in den Figuren 2a, 2b dargestellten Stellung "werfen" erfolgt eine Fokussierung des Luftstrahles und in der in den Figuren 3a, 3b dargestellten Stellung "streuen" erfolgt eine Auffächerung des Luftstrahles zur Seite und nach oben und unten. Dabei bewirken jeweils die Lamellen 3 der äußeren Luftdüseneinheiten 2a und 2c die Komponenten, die in der Ebene liegen, die senkrecht zu den Lamellen 3 derselben angeordnet sind, und die Lamellen 3 der mittleren Luftdüseneinheit 2b die Komponenten, die in der Ebene liegen, die senkrecht zu den Lamellen 3 derselben angeordnet sind. Bei einem horizontalen Einbau, d.h. dass die drei Luftdüseneinheiten 2a, 2b, 2c horizontal nebeneinander angeordnet sind, bewirken die seitlichen Luftdüseneinheiten 2a, 2c ein Fokussieren oder Auffächern in horizontaler Ebene und die mittlere Luftdüseneinheit 2b ein Fokussieren oder Auffächern in vertikaler Ebene.

Zur gemeinsamen Betätigung der drei Luftdüseneinheiten 2a, 2b und 2c ist eine Betätigungsvorrichtung (nicht dargestellt) vorgesehen, die mit einer Antriebswelle 4 verbunden ist. Dabei ist die Antriebswelle 4 drehbar gelagert, wobei an ihr ein senkrecht abstehender Arm 5 zur Übertragung der Drehbewegung in eine annähernde Längsbewegung vorgesehen ist. Die Antriebswelle 4 ist gemäß dem vorliegenden Ausführungsbeispiel etwa um 90° maximal verdrehbar, wobei die Endstellungen die Stellungen "maximal werfen" und "maximal streuen" sind. Dazwischen können stufenlos sämtliche Stellungen eingenommen werden.

Die einzelnen Lamellen 3 der linken und rechten Luftdüseneinheit 2a, 2b sind um zwei Stahldrähte 6 gespritzt, wobei die einzelnen Lamellen 3 senkrecht hierzu angeordnet sind. Die beiden Stahldrähte 6 verlaufen zwischen Lamellen 3 der mittleren Luftdüseneinheit 2b hindurch, ohne dieselbe zu beeinflussen. Die mittlere Luftdüseneinheit 2b ist entsprechend aufgebaut, jedoch um 90° hierzu um eine in Strömungsrichtung liegende Drehachse gedreht, so dass diesbezüglich keine nähere Beschreibung erforderlich ist.

Ausgehend vom Arm 5 ist eine Hebelvorrichtung 7 vorgesehen, welche gegenüber dem Arm 5 schwenkbar ist, so dass die Hebelvorrichtung 7 im wesentlichen nur eine Vor-Rück-Bewegung überträgt. Die Hebelvorrichtung 7 weist zwei zentrale Arme 8 auf, die sich in Richtung der Vor-Rück-Bewegung erstrecken und die fest mit den beiden Stahldrähten 6 verbunden sind.

Die weitere Ausgestaltung ist spiegelbildlich bezüglich der Ebene der Schwenkbewegung des Arms 5, so dass im folgenden nur eine Seite beschrieben wird. Parallel zu den Lamellen 3 der mittleren Luftdüseneinheit 2b verläuft ein Arme 9 ausgehend von der Ebene der Schwenkbewegung in senkrechter Richtung hierzu, welcher fest mit den Armen 8 verbunden ist. An seinem äußeren Ende ist eine T-förmige Verzweigung vorgesehen, welche einen sich parallel zu den Lamellen 3 der linken und rechten Luftdüseneinheit 2a, 2c erstreckende Bolzen 10 bildet, der an seinen Enden im Gehäuse in Vor-Rück-Richtung beweglich gelagert ist. Der Bolzen ist in einer länglichen Öse 11 eines Armes 12 eines weiteren Bolzens 13 aufgenommen, wobei der Bolzen 13 im Gehäuse schwenkbar gelagert ist. Der Bolzen 13 weist einen zweiten, äußeren Arm 14 mit einer entsprechenden Öse 15 auf, welcher sich in Verlängerung des ersten Armes 12 erstreckt. In der Öse 15 ist ein T-förmig ausgestaltetes Ende 16 eines am Gehäuse in Vor-Rück-Richtung geführten Armes 17 schwenk- und etwas in Längsrichtung der Öse 15 verschiebbar aufgenommen. Das andere Ende des Armes 17 ist fest mit den Stahldrähten 6 verbunden.

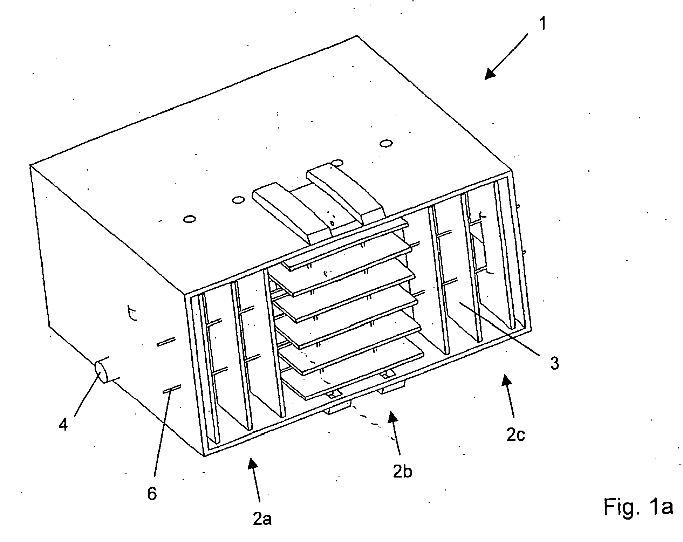

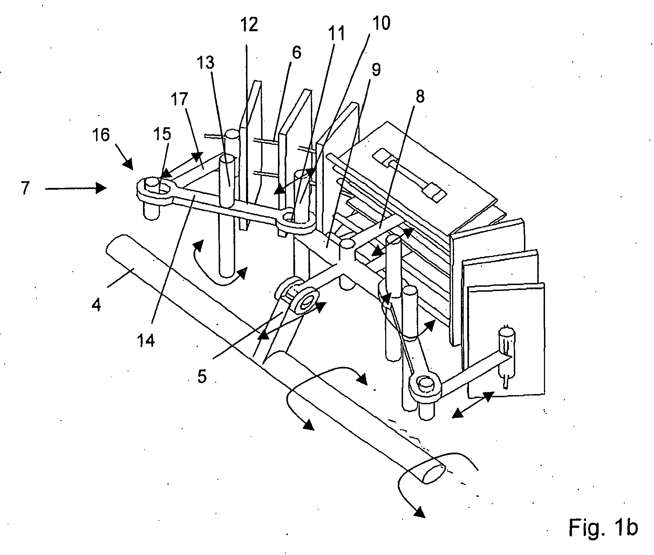

Die Funktion der Hebelvorrichtung 7 ist folgende: Wird die Antriebswelle 4 beispielsweise um 90° aus ihrer Stellung "maximal Streuen" in die Stellung "maximal Richten" gedreht, vorliegend in Richtung des in Fig. 1b an vorderen Ende derselben dargestellten Pfeils, so schwenkt der Arm 5 in die entsprechende Richtung und nimmt die zwei zentralen Arme 8, die mit den Stahldrähten 6 verbunden sind, mit zurück. In Folge der Rückbewegung der mit den Armen 8 fest verbundenen Arme 9 werden die Bolzen 10 ebenfalls zurück bewegt, wobei sie durch das Gehäuse geführt werden. Dabei nehmen sie die Arme 12 mit, so dass die Bolzen 13, die schwenkbar am Gehäuse angebracht sind, in die entsprechende Richtung schwenken. Dadurch werden die äußeren Arme 14 der Bolzen 13 in die Vorrichtung geschwenkt, so dass die Arme 17 nach vorne bewegt werden und die Enden der mit ihnen verbundenen Stahldrähte 6 mitnehmen. Die Lamellen 3 der linken und rechten Luftdüseneinheiten 2a und 2c richten sich dabei entsprechend dem Verlauf der Stahldrähte 6 aus. Mit den Armen 8 kann auch ein Stahldraht verbunden sein, der die Lamellen 3 der mittleren Luftdüseneinheit 2b positioniert, so dass auch diese eine entsprechende Ausrichtungsänderung erfahren.

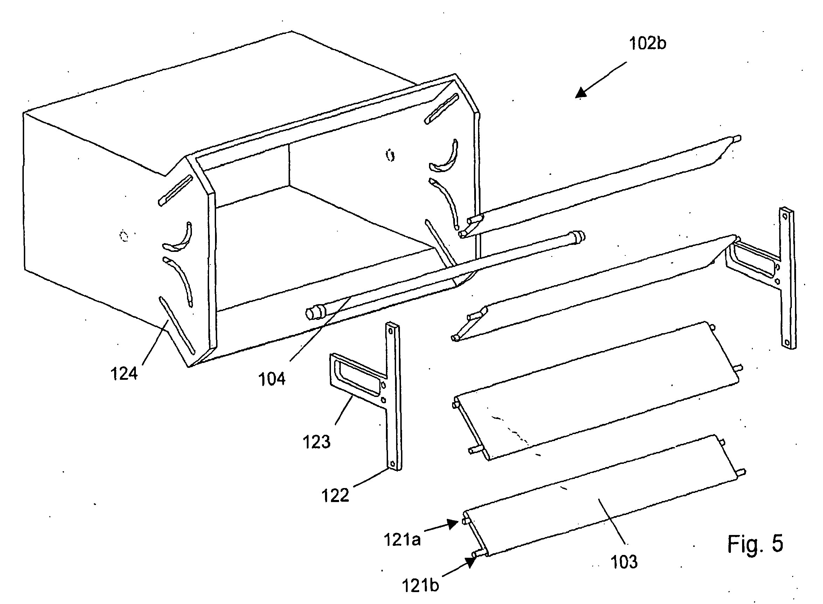

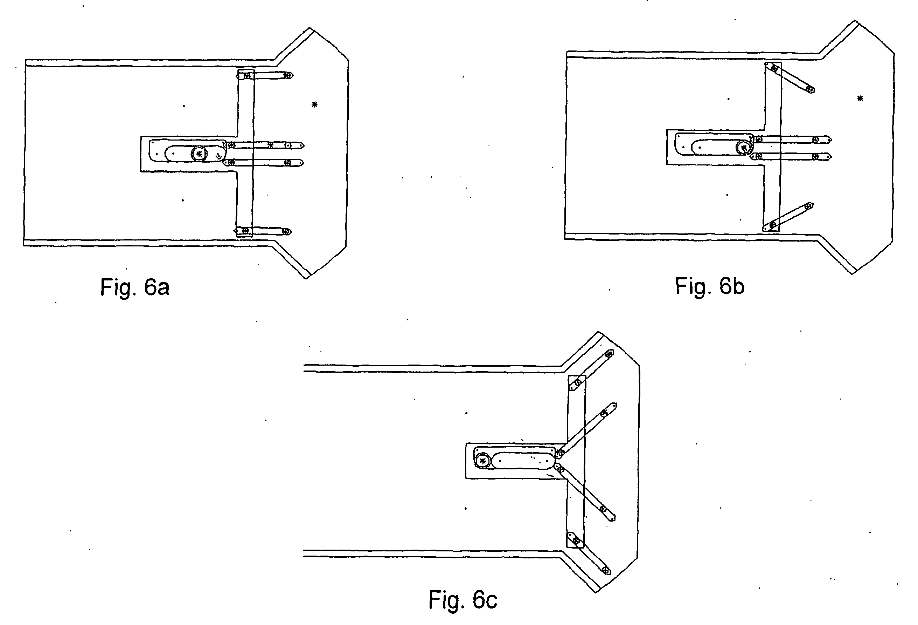

In den Figuren 5 und 6a-c ist eine mittlere Luftdüseneinheit 102b gemäß einem zweiten Ausführungsbeispiel vorgesehen, wobei gleiche oder gleichwirkende Elemente mit um 100 höheren Bezugszeichen bezeichnet werden. Diese mittlere Luftdüseneinheit 102b gemäß dem zweiten Ausführungsbeispiel kann prinzipiell mit beliebigen anderen äußeren Luftdüseneinheiten kombiniert werden, wobei hierfür auch die mittlere Luftdüseneinheit 102b in einer "halben" Ausführungsform verwendet werden kann.

Die mittlere Luftdüseneinheit 102b weist vier Lamellen 103 auf, die mit vier, in Längsrichtung überstehenden Zapfen 121 a, 121b versehen sind. Dabei sind die auf der Luftzuführseite, das heißt der inneren Seite, angeordneten Zapfen 121a kürzer ausgebildet und sind in kreisförmigen Aufnahmen 122, die in zwei Mitnehmern 123 angeordnet sind, drehbar aufgenommen. Die auf der Luftabführseite, das heißt der Außenseite, angeordneten, längeren Zapfen 121b ragen über die Mitnehmer 123 hinaus und sind in Führungen 124 aufgenommen, welche Kulissen bilden.

Die Mitnehmer 123 weisen ein Langloch 125 auf, in dem eine Verzahnung (nicht dargestellt) angeordnet ist, welche mit je einem Ritzel an einer Antriebswelle 104 zusammenwirken, so dass bei einer Drehung der Antriebswelle 104 der Mitnehmer 123 in Längsrichtung bewegt wird und sich die Lamellen 103 entsprechend der Position der längeren Zapfen 121 b in den Führungen 124 ausrichten, wie in den Figuren 6a-c dargestellt.

Durch geeignete Getriebe kann die Drehbewegung der Antriebswelle 104 auch auf entsprechende seitliche Luftdüseneinheiten übertragen werden.

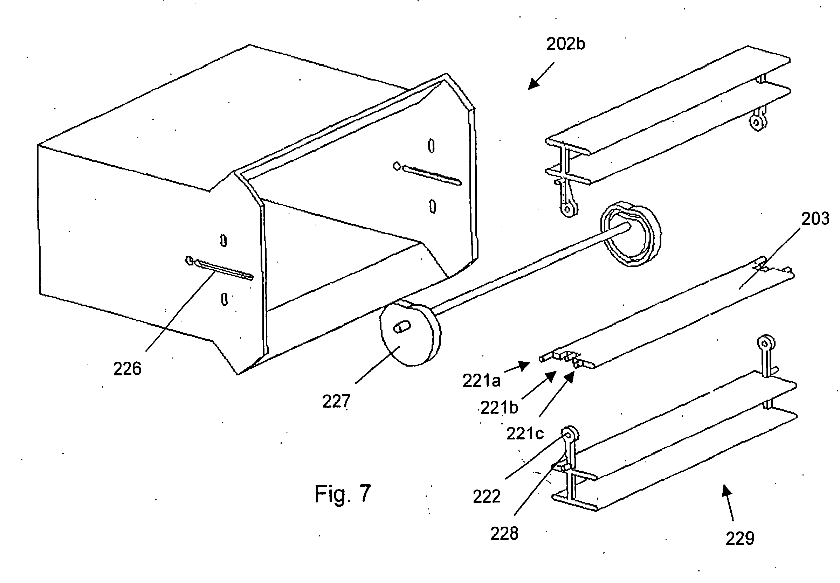

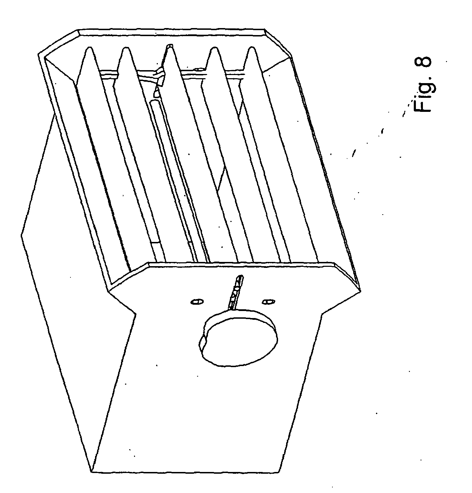

In den Figuren 7, 8 und 9a-c ist eine mittlere Luftdüseneinheit 202b gemäß einem dritten Ausführungsbeispiel vorgesehen, wobei gleiche oder gleichwirkende Elemente mit um 200 höheren Bezugszeichen als beim ersten Ausführungsbeispiel bezeichnet werden. Diese mittlere Luftdüseneinheit 202b gemäß dem zweiten Ausführungsbeispiel kann prinzipiell mit beliebigen anderen äußeren Luftdüseneinheiten kombiniert werden, wobei hierfür auch die mittlere Luftdüseneinheit 202b in einer "halben" Ausführungsform verwendet werden kann.

Gemäß dem dritten Ausführungsbeispiel weist die mittlere Luftdüseneinheit 202b fünf Lamellen 203 auf, wobei eine mittlere Lamelle 203 mit drei Zapfen 221 auf jeder Seite vorgesehen ist. Der jeweils auf der Innenseite angeordnete Zapfen 221 a ist so lang, dass er durch ein Langloch 226 in der Gehäusewand ragt und in eine Kurvenbahn je einer außerhalb des Gehäuses angeordneten Kurvenscheibe 227 ragt. Die beiden Kurvenscheiben 227 sind über eine durch das Gehäuse gehende Welle, die in Verlängerung der mittleren Lamelle 203 angeordnet ist, miteinander fest verbunden

Der mittlere Zapfen 221 b ist kürzer ausgebildet und ist in zwei Aufnahmen 222 aufgenommen, die an je einem Arm 228 einer oberen und einer unteren Lamellenanordnung 229 ausgebildet ist. An jedem der beiden Arme 228 ist auf der Außenseite je ein Zapfen angebracht, der in entsprechende Öffnungen im Gehäuse ragt und als Schwenkachse für die jeweilige Lamellenanordnung 229 dient. Um ein Verklemmen zu verhindern sind die Öffnungen leicht länglich ausgebildet, senkrecht zur Längserstreckung der Langlöcher 226.

Der jeweils auf der Außenseite angeordnete Zapfen 221c ragt in das oben genannte Langloch 224, ohne jedoch über das Gehäuse nach außen vorzustehen.

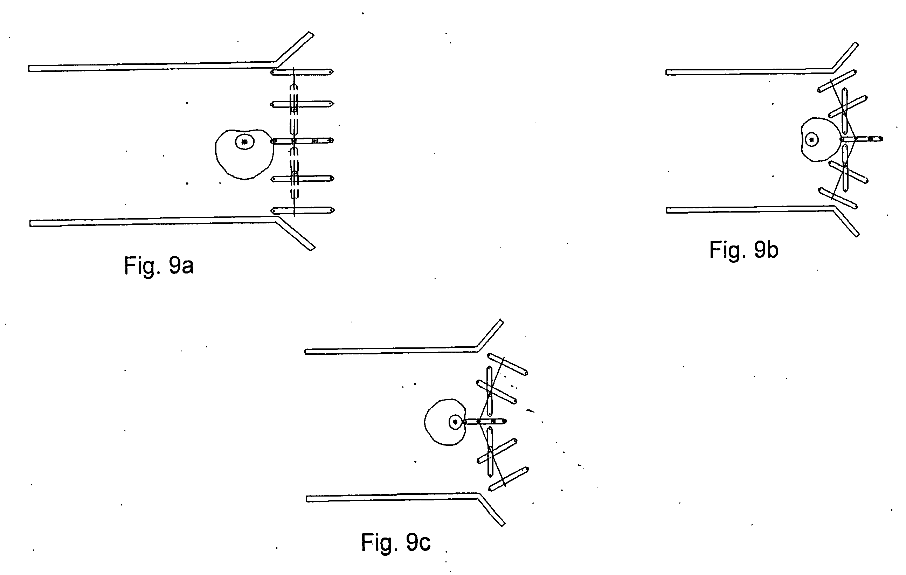

Drei verschiedenen Stellungen sind in den Figuren 9a-c dargestellt, wobei der Antrieb über die Kurvenscheibe 225 erfolgt, die mittels einer nicht näher dargestellten Antriebswelle angetrieben wird.

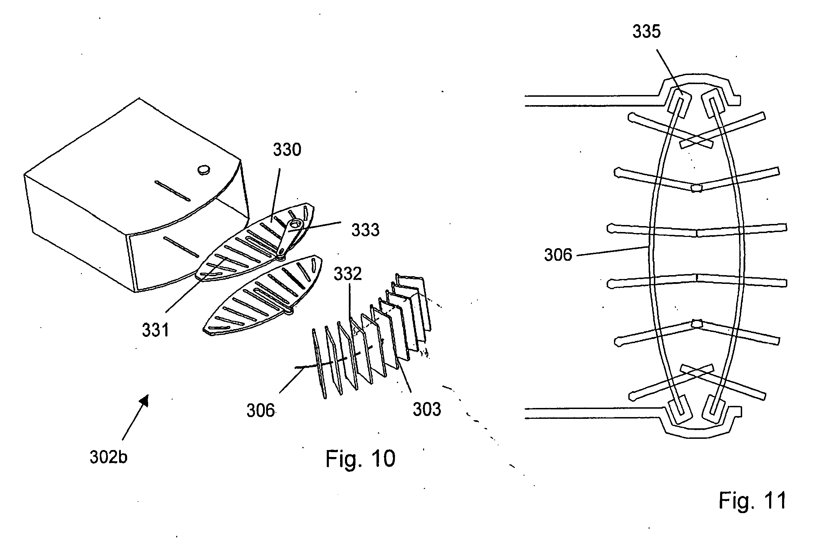

In den Figuren 10 und 11 ist eine mittlere Luftdüseneinheit 302b gemäß einem vierten Ausführungsbeispiel dargestellt. Die einzelnen Kunststoff-Lamellen 303 sind mittels eines Stahldrahtes 306 miteinander verbunden, um welchen sie gespritzt sind, wobei der Stahldraht 306 mittig angeordnet ist. Wie aus Fig. 10 ersichtlich ist, sind im Gehäuse oben und unten Steuerscheiben 330 mit Führungen 331 für die einzelnen Lamellen 303 vorgesehen, die im Gehäuse in normale Luftausströmrichtung vor und zurück bewegt werden können, wofür sie in den Führungen 331 entlanggleitende Zapfen 332 aufweisen. Ein Hebel 333 überträgt eine gewünschte Stellungsänderung der Lamellen 303 auf die mittlere Lamelle 303, so dass die Stellungsänderung über den Stahldraht 306 an die anderen Lamellen 303 übertragen wird, die sich, geführt von den Zapfen 332 in den Führungen 331 der Steuerscheiben 330, entsprechend neu ausrichten. Der Stahldraht 303 weist an seinen Enden je einen Gleitstein 335 auf, welcher in entsprechenden Führungen in den Seitenwänden des Gehäuses aufgenommen ist (vgl. Fig. 11).

### Bezugszeichenliste

- 1: Luftdüse
- a, 2b, 2c, 102b, 202b, 302b: 2 Luftdüseneinheit
- 3, 103, 203, 303: Lamelle
- 4: Antriebswelle
- 5: Arm
- 6, 306: Stahldraht
- 7: Hebelvorrichtung
- 8: Arm
- 9: Arm
- 10: Bolzen
- 11: Öse
- 12: Arm
- 13: Bolzen
- 14: Arm
- 15: Öse
- 16: Ende
- 17: Arm
- 121a, 121b, 221, 221a, 221b: Zapfen
- 122, 222: Aufnahme
- 123: Mitnehmer
- 124: Führung
- 125: Langloch
- 226: Langloch
- 227: Kurvenscheibe
- 228: Arm
- 229: Lamellenanordnung
- 330: Steuerscheibe
- 331: Führung
- 332: Zapfen
- 333: Hebel
- 335: Gleitstein

## Patentansprüche

1. Luftdüse, insbesondere für ein Belüftungssystem eines Kraftfahrzeugs, mit einer Betätigungsvorrichtung, wobei die Luftdüse (1) durch mindestens zwei nebeneinander angeordnete Luftdüseneinheiten (2a, 2b, 2c; 102b; 202b; 302b) gebildet ist, die durch die eine gemeinsame Betätigungsvorrichtung bedienbar sind, wobei jede Luftdüseneinheit (2a, 2b, 2c; 102b; 202b; 302b) durch eine Düse mit einer Mehrzahl von Lamellen (3; 103; 203; 303) gebildet ist, **dadurch gekennzeichnet, dass** die Lamellen (3; 103; 203; 303) zweier benachbarter Luftdüseneinheiten (2a, 2b, 2c; 102b; 202b; 302b) um einen Winkel von 90° zueinander gedreht angeordnet sind.

2. Luftdüse nach Anspruch 1, **dadurch gekennzeichnet, dass** drei Luftdüseneinheiten (2a, 2b, 2c; 102b; 202b; 302b) vorgesehen sind, die in einer Reihe angeordnet sind.

3. Luftdüse nach Anspruch 2, **dadurch gekennzeichnet, dass** die beiden äußeren Luftdüseneinheiten (2a, 2c) spiegelbildlich zueinander ausgebildet sind.

4. Luftdüse nach einem der vorhergehenden Ansprüche, **dadurch gekennzeichnet, dass** eine gemeinsame, die Betätigungsvorrichtung bildende oder mit der Betätigungsvorrichtung verbundene Antriebswelle (4) vorgesehen ist.

5. Luftdüse nach Anspruch 4, **dadurch gekennzeichnet, dass** die Antriebswelle (4) maximal in einem Winkel von 90° +/- 20° verdrehbar ist.

6. Luftdüse nach einem der vorhergehenden Ansprüche, **dadurch gekennzeichnet, dass** die Betätigungsvorrichtung durch eine Hebelvorrichtung (7) gebildet ist.

7. Luftdüse nach einem der vorhergehenden Ansprüche, **dadurch gekennzeichnet, dass** mindestens eine Luftdüseneinheit (2a, 2b, 2c; 102b; 202b; 302b) mit Lamellen (3; 103; 203; 303) vorgesehen ist, wobei die Lamellen (3; 103; 203; 303) entlang mindestens eines elastischen Elements fixiert an demselben angeordnet sind.

8. Luftdüse nach Anspruch 7, **dadurch gekennzeichnet, dass** das elastische Element durch einen oder mehrere parallel zueinander verlaufende Drähte (6; 306) gebildet ist.

9. Luftdüse nach Anspruch 7 oder 8, **dadurch gekennzeichnet, dass** die einzelnen Lamellen (3; 303) senkrecht zum elastischen Element angeordnet sind.

10. Luftdüse nach einem der vorhergehenden Ansprüche, **dadurch gekennzeichnet, dass** Führungen (124; 331) für die einzelnen Lamellen (3; 103; 203; 303) vorgesehen sind.

11. Luftdüse nach Anspruch 10, **dadurch gekennzeichnet, dass** die Führungen (124; 331) durch Nuten oder Schlitze in Steuerscheiben (330) oder im Gehäuse gebildet sind.

12. Belüftungssystem für ein Kraftfahrzeug, **gekennzeichnet durch** die Verwendung einer Luftdüse nach einem der vorstehenden Ansprüche.

## Claims

1. An air vent, in particular for a ventilation system in a motor vehicle, having an actuating device, the air vent (1) taking the form of at least two air vent units (2a, 2b, 2c; 102b; 202b; 302b) positioned side by side which can be operated by a common actuating device, each air vent unit (2a, 2b, 2c; 102b; 202b; 302b) taking the form of a vent with a plurality of louvers (3; 103; 203; 303),
**characterised in that**
the louvers (3; 103; 203; 303) of two adjacent air vent units (2a, 2b, 2c; 102b; 202b; 302b) are positioned rotated about 90° in relation to one another.

2. An air vent in accordance with claim 1,
**characterised in that**
three air vent units (2a, 2b, 2c; 102b; 202b; 302b) are provided positioned in a row.

3. An air vent in accordance with claim 2,
**characterised in that**
the two outer air vent units (2a, 2c) are mirror-symmetrical in relation to one another.

4. An air vent in accordance with one of the preceding claims,
**characterised in that**
a common drive shaft (4) is provided which either represents the actuating device or is connected to the actuating device.

5. An air vent in accordance with claim 4,
**characterised in that**
the drive shaft (4) can be rotated about a maximum angle of 90° ± 20°.

6. An air vent in accordance with one of the preceding claims,
**characterised in that**
the actuating device takes the form of a lever device (7).

7. An air vent in accordance with one of the preceding claims,
**characterised in that**
at least one air vent unit (2a, 2b, 2c; 102b; 202b; 302b) is provided with louvers (3; 103; 203; 303), said louvers (3; 103; 203; 303) being positioned along at least one elastic element and fixed thereto.

8. An air vent in accordance with claim 7,
**characterised in that**
the elastic element takes the form of one or more wires (6; 306) running parallel with one another.

9. An air vent in accordance with claim 7 or 8,
**characterised in that**
the individual louvers (3; 303) are positioned perpendicular in relation to the elastic element.

10. An air vent in accordance with one of the preceding claims,
**characterised in that**
guides (124; 331) are provided for the individual louvers (3; 103; 203; 303).

11. An air vent in accordance with claim 10,
**characterised in that**
the guides (124; 331) take the form of channels or slits in guide discs (33) in the housing.

12. A ventilation system for a motor vehicle,
**characterised by**
the use of an air vent in accordance with one of the preceding claims.

## Revendications

1. Buse d'air, en particulier pour un système d'aération d'un véhicule automobile, comprenant un dispositif d'actionnement, la buse d'air (1) étant formée par au moins deux unités de buse d'air (2a, 2b, 2c ; 102b ; 202b ; 302b) disposées l'une à côté de l'autre, lesquelles peuvent être commandées par un dispositif d'actionnement commun, chaque unité de buse d'air (2a, 2b, 2c ; 102b ; 202b ; 302b) étant formée par une buse avec une pluralité de lamelles (3 ; 103 ; 203 ; 303), **caractérisée en ce que** les lamelles (3 ; 103 ; 203 ; 303) de deux unités de buse d'air (2a, 2b, 2c ; 102b ; 202b ; 302b) voisines étant disposées et tournées d'un angle de 90° l'une par rapport à l'autre.

2. Buse d'air selon la revendication 1, **caractérisée en ce que** trois unités de buse d'air (2a, 2b, 2c ; 102b ; 202b ; 302b) sont prévues, lesquelles sont disposées dans une rangée.

3. Buse d'air selon la revendication 2, **caractérisée en ce que** les deux unités de buse d'air (2a, 2c) extérieures sont conçues symétriquement par rapport à un plan.

4. Buse d'air selon l'une quelconque des revendications précédentes, **caractérisée en ce qu'**un arbre d'entraînement (4) commun, formant le dispositif d'actionnement ou relié au dispositif d'actionnement, est prévu.

5. Buse d'air selon la revendication 4, **caractérisée en ce que** l'arbre d'entraînement (4) peut être tourné au maximum dans un angle de 90°+/-20°.

6. Buse d'air selon l'une quelconque des revendications précédentes, **caractérisée en ce que** le dispositif d'actionnement est formé par un dispositif de levier (7).

7. Buse d'air selon l'une quelconque des revendications précédentes, **caractérisée en ce qu'**au moins une unité de buse d'air (2a, 2b, 2c ; 102b ; 202b ; 302b) avec des lamelles (3 ; 103 ; 203 ; 303) est prévue, les lamelles (3 ; 103 ; 203 ; 303) étant fixées le long d'au moins un élément élastique et étant disposées sur celui-ci.

8. Buse d'air selon la revendication 7, **caractérisée en ce que** l'élément élastique est formé par un fil ou plusieurs fils (6 ; 306) agencés parallèlement entre eux.

9. Buse d'air selon la revendication 7 ou 8, **caractérisée en ce que** les lamelles (3 ; 103 ; 203 ; 303) individuelles sont disposées perpendiculairement à l'élément élastique.

10. Buse d'air selon l'une quelconque des revendications précédentes, **caractérisée en ce que** des guides (124 ; 331) pour les lamelles individuelles (3 ; 103 ; 203 ; 303) sont prévues.

11. Buse d'air selon la revendication 10, **caractérisée en ce que** les guides (124 ; 331) sont formés par des rainures ou des fentes dans des disques de commande (330) ou dans le boîtier.

12. Système d'aération pour un véhicule automobile, **caractérisé par** l'utilisation d'une buse d'air selon l'une quelconque des revendications précédentes.
